# EUROPEAN PATENT SPECIFICATION

(11) **EP 2 832 541 B1**
(45) Date of publication and mention of the grant of the patent: **14.06.2017**
(21) Application number: 12872827.6
(22) Date of filing: 29.03.2012
(51) Int. Cl.: B32B 27/32, B32B 27/08, B65D 27/04

(54) **BI-ORIENTED POLYPROPYLENE FILM FOR ENVELOPE WINDOWS**
BIORIENTIERTE POLYPROPYLENFOLIE FÜR BRIEFUMSCHLAGFENSTER
FILM DE POLYPROPYLÈNE BI-ORIENTÉ POUR DES FENÊTRES D'ENVELOPPES

(43) Date of publication of application: 04.02.2015
(73) Proprietor: Innovative Film Solutions SL, 28001 Madrid (ES)
(72) Inventor: MARTIN GRACIA, Jesus, E-50171 Zaragoza (ES); JIMÉNEZ GUARDIA, Alfonso, E-33690 Lugo de Llanera (Asturias) (ES)
(74) Representative: Carlos Hernando, Borja
(86) International application number: PCT/ES2012/070212
(87) International publication number: WO 2013/144386

(56) References cited:
- WO-A1-2010/128175
- WO-A2-2007/027163
- DE-A1-102007 048 090
- US-A- 5 468 563
- US-A1- 2007 218 263
- US-A1- 2009 004 424

## Description

This description refers, as its title indicates, to a bi-oriented polypropylene film for envelope windows, characterized in that it comprises two or more layers, the core layer or body of the film being composed in the main of polypropylene and at least one or several of the outer layers being compatible with adhesives, having several competitive advantages over the plastic films currently used in this industry.

### Field of the invention

The application for which this film is intended is the market for the manufacture of transparent window envelopes.

### The Prior Art

The window envelope manufacturing industry currently uses various types of plastic films made with different polymers:
Films made with PS (polystyrene), films made with PET (polyethylene terephthalate) and films made with PLA (polylactic acid), although currently the most consumed polymer for this application is polystyrene.

All of these polymers have a high density since the application requires the plastic film to have a high degree of stiffness so that it can be processed in envelope production machines that operate at high speed. Thus the density of PS film is currently 1.05 g /cm³, the density of PET film is 1.40 g /cm³ and the density of PLA film is 1.27 g /cm³.

At the present time the most commonly used film for this application is that made with PS (polystyrene) produced by a bubble extrusion system.

Polypropylene is a material having characteristics for fixing adhesives, which are not good, limiting or impeding its application in industrial uses that require adhesives to be applied in some of their processes.

### Background of the invention

Different applications of polypropylene films are known. For example, WO 2012016964 and WO 2011141380 patents disclose embodiments in bi-oriented polypropylene for electronic applications, especially in the manufacture of condensers.

Spanish patents ES2336457 ES2287784, ES2235997T and ES2185840T are examples of the many embodiments of polypropylene films for the manufacture of packaging and food applications, without adhesives.

Patent GB2479561 describes labels for bottles or cans with a BOPP polypropylene core mixed with an additive treated by corona discharge and a pressure sensitive adhesive, but it does not have a specific layer to support the subsequent coating of an adhesive.

PCT/ ES2009/070145 provides a simplification of the known conventional process for the manufacture of biaxially-oriented polypropylene film by eliminating the processes of separate coating and of secondary cutters, reducing the by-products and achieving energy savings by combining the layers in their initial processing phase, but it is not envisaged for manufacturing films for envelope windows nor does it include any specific layer to enhance the fixing of the adhesive.

DE102007048090 describes a transparent biaxial oriented multilayered window film for envelopes, comprising a polypropylene layer and at least a layer made of copolymer of propylene and ethylene and/or at least further 4-10C-olefin where the total thickness of the multilayered film is 25 µm.

US4568563 describes stretched, multilayer, transparent films consisting predominantly of polypropylene and being suitable as window films for envelopes.

### Description of the invention

To solve the problems that exist at present in the manufacture of envelope windows using polypropylene films, providing an alternative to currently existing films, a bi-oriented polypropylene film for envelope windows as described in claim 1 has been devised, being formed by two or more layers, able to form various layer structures, in such a way that the core layer is, in the main, made of polypropylene and at least one of the outer layers is compatible with the adhesives currently used to manufacture envelopes with windows.

This compatibility of the outer layer with the adhesives is achieved by using one or several polymers chosen from the group: EVA (ethyl vinyl acetate), EBA (ethyl butyl acrylate), EMA (ethyl methyl acrylate), EEA (ethylene ethyl acrylate), EAA (ethylene acrylic acid), polypropylene ethylene butene terpolymer, antiblocking and slip additives based on the previous polymers.

The outer face of the film may optionally be treated with corona treatment, flame treatment or chemical treatment during the manufacturing process.

Additionally the film may have another outer layer to improve the antistatic, antibocking and slip properties of the film, as well as to modify the degree of transparency of the same. Furthermore, it is envisaged that two intermediate layers may be used to improve the stiffness of the film as well as to improve the compatibility between the outer layers and the core layer or body of the film.

### Advantages of the invention

The bi-oriented polypropylene film for envelope windows that is presented provides multiple advantages over currently available films, the most important being that it allows the use of a film of the same thickness but a lesser weight and with identical characteristics to the current ones, which represents a reduction in consumption of plastic films in the manufacture of envelopes with windows of between 15% and 35%, depending on the type of film replaced, with the consequent economic savings in the process.

Another important advantage of this film is that it can be used as an alternative by envelope manufacturers in a totally compatible way, without any type of change in the machinery or processes currently used with other films that are not polypropylene but rather polystyrene.

Another of the major advantages to be noted is that it enables a film to be obtained that has greater transparency and less residues, while at the same time it has very good adhesion characteristics and does not easily come unstuck.

### Description of embodiments

To gain a better understanding of the object of the present invention, four practical, preferred embodiments of a bi-oriented polypropylene film for envelope windows, are described. Embodiment -1- relates to the basic structure of the film composed of a main layer (1) the purpose of which is to provide the main mechanical properties of the film, such as stiffness, tenacity, etc...., and whose composition will be the same in all of the structures employed, and an outer layer or skin (2) whose primary function is to facilitate the adhesion of the film to envelope papers by means of adhesives. The composition and thickness of this layer remain constant for all of the possible structures of the film Embodiment -2- concerns an alternative embodiment of the structure of a film in which, to the first two layers (1) and (2), another outer layer (3) is added in order to improve optical and physical properties such as the coefficient of friction, antiblocking properties, antistatic properties, etc. Embodiment -3- concerns another alternative embodiment of the structure of a film in which, to the first two layers of embodiment -1-, another outer layer (2) is added in order to improve optical and physical properties such as the coefficient of friction, antiblocking properties, antistatic properties, etc. Embodiment -4- concerns another alternative embodiment of the structure of a film in which, the three layers of embodiment -2- have two layers (4) inserted between the body and the outer skin in order to improve the stiffness of the film and the compatibility between the outer layers (2,3) and the core layer (1) of the film.

### Preferred embodiment of the invention

The bi-oriented polypropylene film for envelope windows that is the object of the present invention basically comprises two or more layers.

The core layer (1) or body of the film is composed of between 70% and 98% polypropylene, between 1% and 30% of a totally or partially hydrogenated resin, preferably between 5% and 15%, and between 1% and 10% of antistatic and slip additives based on polypropylene, preferably between 1% and 5%. Its thickness is between 18µ and 35µ, preferably between 25µ and 32µ

At least one of the outer layers (2) is compatible with the adhesives currently used in the market and will be responsible for allowing the film to adhere to the envelope paper. This outer layer or layers (2) are composed of one or a mix of several polymers chosen from the group: EVA (ethyl vinyl acetate), EBA (ethyl butyl acrylate), EMA (ethyl methyl acrylate), EEA (ethylene ethyl acrylate), EAA (ethylene acrylic acid), polypropylene ethylene butene terpolymer, antiblocking and slip additives based on the previous polymers. The thickness of the outer layer or layers (2) is between 0.7µ and 1.5µ, preferably between 0.9µ and 1.2µ.

It is envisaged that, during the manufacturing process, the outer layer or layers (2) may optionally receive corona treatment, flame treatment or chemical treatment aimed at improving the adhesion of the adhesives used in forming the envelopes.

In a preferred embodiment it is envisaged that the film is formed only by the core layer (1) and one outer layer (2) as in embodiment -1-, although in an alternative embodiment it is envisaged with two outer layers (2), as in embodiment -3-.

Alternatively, as in embodiment -2-, it is envisaged that the film comprises another outer layer (3) that improves the antistatic, antiblocking and slip properties of the film, located on the opposite face to the outer layer (2) and being composed of one or a mix of several polymers chosen from the group: polypropylene, polypropylene ethylene copolymer and polypropylene ethylene butene terpolymer plus antistatic, slip and antiblocking additives. This outer layer (3) has a thickness of between 0.6µ and 3µ.

Also alternatively, as in embodiment -4-, it is envisaged that the film comprises one or two intermediate layers (4) to improve stiffness as well as improving compatibility between the outer layers (2,3) and the core layer (1) or body of the film, located between the core layer (1) and the outer layer or layers (2,3), being composed of one or a mix of several polymers chosen from the group: EVA (ethyl vinyl acetate), EBA (ethyl butyl acrylate), EMA (ethyl methyl acrylate), EEA (ethylene ethyl acrylate), EAA (ethylene acrylic acid), polypropylene, ethylene polypropylene copolymer, polypropylene ethylene butane terpolymer, totally or partially hydrogenated resin. This intermediate layer (4) has a thickness of between 0.6µ and 1µ.

## Claims

1. Bi-oriented polypropylene film for envelope windows **characterized in that** it comprises two or more layers, the core layer (1) or body of the film is consisting of from 70% to 98% polypropylene, from 1% to 30% of a totally or partially hydrogenated resin and from 1% to 10% of antistatic and slip additives based on polypropylene, and at least one outer layer (2) is compatible with adhesives and consists of one or a mix of several polymers chosen from the group: EVA (ethyl vinyl acetate), EBA (ethyl butyl acrylate), EMA (ethyl methyl acrylate), EEA (ethylene ethyl acrylate), EAA (ethylene acrylic acid), polypropylene ethylene butene terpolymer, antiblocking and slip additives based on the previous polymers, and **characterized in that** the outer layer has a thickness of from 0.7µm to 1.5µm.

2. Bi-oriented polypropylene film for envelope windows, according to claim 1, wherein the film presents two outer layers (2) which are compatible with adhesives and are consisting of one or a mix of several polymers chosen from the group: EVA (ethyl vinyl acetate), EBA (ethyl butyl acrylate), EMA (ethyl methyl acrylate), EEA (ethylene ethyl acrylate), EAA (ethylene acrylic acid), polypropylene ethylene butene terpolymer, antiblocking and slip additives based on the previous polymers, and **characterized in that** the outer layers have a thickness of from 0.7µm to 1.5µm.

3. Bi-oriented polypropylene film for envelope windows, according to any of the preceding claims, wherein the core layer (1) has a thickness of between 18µm and 35µm.

4. Bi-oriented polypropylene film for envelope windows, according to any of the preceding claims, wherein the core layer (1) has a thickness of between 25µm and 32µm.

5. Bi-oriented polypropylene film for envelope windows, according to either of the claims 1 and 2, wherein the outer layer or layers (2) have a thickness of between 0.9µm and 1.2µm.

6. Bi-oriented polypropylene film for window envelopes, according to either of the claims 1 and 2, wherein the outer layer or layers (2) have received corona treatment, flame treatment or chemical treatment during the manufacturing process.

7. Bi-oriented polypropylene film for window envelopes, according to claim 1, wherein the film comprises another outer layer (3) to improve properties, located on the opposite face to the outer layer (2) and being composed of one or a mix of several polymers chosen from the group: polypropylene, polypropylene ethylene copolymer and polypropylene ethylene butene terpolymer plus antistatic, slip and antiblocking additives.

8. Bi-oriented polypropylene film for envelope windows, according to claim 7, wherein the outer layer (3) has a thickness of between 0.6µm and 3µm.

9. Bi-oriented polypropylene film for window envelopes, according to any of the preceding claims, wherein the film comprises one or two intermediate layers (4) to improve stiffness, located between the core layer (1) and the outer layer or layers (2,3), being composed of one or a mix of several polymers selected from the group: EVA (ethyl vinyl acetate), EBA (ethyl butyl acrylate), EMA (ethyl methyl acrylate), EEA (ethylene ethyl acrylate), EAA (ethylene acrylic acid), polypropylene, ethylene polypropylene copolymer, polypropylene ethylene butene terpolymer, totally or partially hydrogenated resin.

10. Bi-oriented polypropylene film for envelope windows, according to claim 9, wherein the intermediate layer (4) has a thickness of between 0.6µm and 1µm.

## Patentansprüche

1. Biorientierte Polypropylenfolie für Briefumschlagfenster, **dadurch gekennzeichnet, dass** sie zwei oder mehr Schichten umfasst, wobei die Kernschicht (1) oder der Körper der Folie zu 70 % bis 98 % aus Polypropylen, zu 1 % bis 30 % aus einem vollständig oder teilweise hydrierten Harz und zu 1 % bis 10 % aus auf Polypropylen basierenden Antistatik- und Gleitmitteln besteht und wobei mindestens eine äußere Schicht (2) mit Klebstoffen verträglich ist und aus einem oder einer Mischung von mehreren Polymeren besteht, die aus der folgenden Gruppe ausgewählt sind: EVA (Ethylvinylacetat), EBA (Ethylbutylacrylat), EMA (Ethylmethylacrylat), EEA (Ethylenethylacrylat), EAA (Ethylenacrylsäure), Polypropylen-Ethylen-Buten-Terpolymer, auf den vorigen Polymeren basierenden Antiblock- und Gleitmitteln, und **dadurch gekennzeichnet, dass** die äußere Schicht eine Dicke von 0,7 µm bis 1,5 µm aufweist.

2. Biorientierte Polypropylenfolie für Briefumschlagfenster nach Anspruch 1, wobei die Folie zwei äußere Schichten (2) aufweist, welche mit Klebstoffen verträglich sind und aus einem oder einer Mischung von mehreren Polymeren bestehen, die aus der folgenden Gruppe ausgewählt sind: EVA (Ethylvinylacetat), EBA (Ethylbutylacrylat), EMA (Ethylmethylacrylat), EEA (Ethylenethylacrylat), EAA (Ethylenacrylsäure), Polypropylen-Ethylen-Buten-Terpolymer, auf den vorigen Polymeren basierenden Antiblock- und Gleitmitteln, und **dadurch gekennzeichnet, dass** die äußeren Schichten eine Dicke von 0,7 µm bis 1,5 µm aufweisen.

3. Biorientierte Polypropylenfolie für Briefumschlagfenster nach einem der vorhergehenden Ansprüche, wobei die Kernschicht (1) eine Dicke von zwischen 18 µm und 35 µm aufweist.

4. Biorientierte Polypropylenfolie für Briefumschlagfenster nach einem der vorhergehenden Ansprüche, wobei die Kernschicht (1) eine Dicke von zwischen 25 µm und 32 µm aufweist.

5. Biorientierte Polypropylenfolie für Briefumschlagfenster nach einem der Ansprüche 1 und 2, wobei die äußere Schicht oder äußeren Schichten (2) eine Dicke von zwischen 0,9 µm und 1,2 µm aufweisen.

6. Biorientierte Polypropylenfolie für Briefumschlagfenster nach einem der Ansprüche 1 und 2, wobei die äußere Schicht oder äußeren Schichten (2) während des Herstellungsprozesses eine Coronabehandlung, ein Beflammen oder eine chemische Behandlung erhalten haben.

7. Biorientierte Polypropylenfolie für Briefumschlagfenster nach Anspruch 1, wobei die Folie eine weitere äußere Schicht (3) zum Verbessern von Eigenschaften umfasst, welche auf der Seite gegenüber der äußeren Schicht (2) angeordnet ist und aus einem oder einer Mischung von mehreren Polymeren besteht, die aus der folgenden Gruppe ausgewählt sind: Polypropylen, Polypropylen-Ethylen-Copolymer und Polypropylen-Ethylen-Buten-Terpolymer sowie Antistatik-, Gleit- und Antiblockmitteln.

8. Biorientierte Polypropylenfolie für Briefumschlagfenster nach Anspruch 7, wobei die äußere Schicht (3) eine Dicke von zwischen 0,6 µm und 3 µm aufweist.

9. Biorientierte Polypropylenfolie für Briefumschlagfenster nach einem der vorhergehenden Ansprüche, wobei die Folie eine oder zwei Zwischenschichten (4) zum Verbessern der Steifigkeit umfasst, welche zwischen der Kernschicht (1) und der äußeren Schicht oder den äußeren Schichten (2,3) angeordnet sind, wobei sie aus einem oder einer Mischung von mehreren Polymeren bestehen, die aus der folgenden Gruppe ausgewählt sind: EVA (Ethylvinylacetat), EBA (Ethylbutylacrylat), EMA (Ethylmethylacrylat), EEA (Ethylenethylacrylat), EAA (Ethylenacrylsäure), Polypropylen, Ethylen-Polypropylen-Copolymer, Polypropylen-Ethylen-Buten-Terpolymer, vollständig oder teilweise hydriertem Harz.

10. Biorientierte Polypropylenfolie für Briefumschlagfenster nach Anspruch 9, wobei die Zwischenschicht (4) eine Dicke von zwischen 0,6 µm und 1 µm aufweist.

## Revendications

1. Film de polypropylène bi-orienté pour fenêtres d'enveloppe **caractérisé en ce qu'**il comprend deux ou plusieurs couches, la couche centrale (1) ou corps du film étant constituée entre 70 % et 98 % de polypropylène, entre 1 % et 30 % d'une résine totalement ou partiellement hydrogénée et entre 1 % et 10% d'additifs antistatiques et antidérapants à base de polypropylène, et au moins une couche externe (2) est compatible avec des adhésifs et est constituée d'un polymère ou mélange de plusieurs polymères choisis dans le groupe : EVA (éthyle acétate de vinyle), EBA (éthyle acrylate de butyle), EMA (éthyle acrylate de méthyle), EEA (éthylène acrylate d'éthyle), EAA (éthylène acide acrylique), le terpolymère de polypropylène éthylène butène, les additifs anti-bloquants et antidérapants basés sur les polymères précédents, et **caractérisés en ce que** la couche externe a une épaisseur comprise entre 0,7 µm et 1,5 µm.

2. Film de polypropylène bi-orienté pour fenêtres d'enveloppe, selon la revendication 1, dans lequel le film présente deux couches externes (2) qui sont compatibles avec des adhésifs et qui sont constituées d'un polymère ou mélange de plusieurs polymères choisis dans le groupe : EVA (éthyle acétate de vinyle), EBA (éthyle acrylate de butyle), EMA (éthyle acrylate de méthyle), EEA (éthylène acrylate d'éthyle), EAA (éthylène acide acrylique), le terpolymère de polypropylène éthylène butène, les additifs anti-bloquants et antidérapants à base des polymères précédents, et **caractérisé en ce que** les couches externes ont une épaisseur comprise entre 0,7 µm et 1,5 µm.

3. Film de polypropylène bi-orienté pour fenêtres d'enveloppe, selon l'une quelconque des revendications précédentes, dans lequel la couche centrale (1) a une épaisseur comprise entre 18 µm et 35 µm.

4. Film de polypropylène bi-orienté pour fenêtres d'enveloppe, selon l'une quelconque des revendications précédentes, dans lequel la couche centrale (1) a une épaisseur comprise entre 25 µm et 32 µm.

5. Film de polypropylène bi-orienté pour fenêtres d'enveloppe, selon l'une ou l'autre des revendications 1 et 2, dans lequel la couche externe ou les couches externes (2) ont une épaisseur comprise entre 0,9 µm et 1,2 µm.

6. Film de polypropylène bi-orienté pour fenêtres d'enveloppe, selon l'une ou l'autre des revendications 1 et 2, dans lequel la couche externe ou les couches externes (2) ont reçu un traitement corona, un traitement à la flamme ou un traitement chimique pendant le processus de fabrication.

7. Film de polypropylène bi-orienté pour fenêtres d'enveloppe, selon la revendication 1, dans lequel le film comprend une autre couche externe (3) pour améliorer les propriétés, située sur la face opposée à la couche externe (2) et étant composée d'un polymère ou mélange de plusieurs polymères choisis dans le groupe : polypropylène, copolymère de polypropylène éthylène et terpolymère de polypropylène éthylène butène, de plus, additifs antistatiques, antidérapants et anti-bloquants.

8. Film de polypropylène bi-orienté pour fenêtres d'enveloppe, selon la revendication 7, dans lequel la couche externe (3) a une épaisseur comprise entre 0,6 µm et 3 µm.

9. Film de polypropylène bi-orienté pour fenêtres d'enveloppe, selon l'une quelconque des revendications précédentes, dans lequel le film comprend une ou deux couches intermédiaires (4) pour améliorer la rigidité, situées entre la couche centrale (1) et la couche externe ou les couches externes (2, 3), étant composées d'un polymère ou mélange de plusieurs polymères choisis dans le groupe : EVA (éthyle acétate de vinyle), EBA (éthyle acrylate de butyle), EMA (éthyle acrylate de méthyle), EEA (éthylène acrylate d'éthyle), EAA (éthylène acide acrylique), polypropylène, copolymère d'éthylène polypropylène, terpolymère de polypropylène éthylène butène, une résine totalement ou partiellement hydrogénée.

10. Film de polypropylène bi-orienté pour fenêtres d'enveloppe, selon la revendication 9, dans lequel la couche intermédiaire (4) a une épaisseur comprise entre 0,6 µm et 1 µm.
